# EUROPEAN PATENT APPLICATION

(11) **EP 4 528 580 A1**
(43) Date of publication of application: **26.03.2025**
(21) Application number: 23914462.9
(22) Date of filing: 07.12.2023
(51) Int. Cl.: G06F 40/58

(54) **TRAINING METHOD FOR TRANSLATION MODEL, TRANSLATION METHOD, AND DEVICE**

(30) Priority: 06.01.2023 CN 202310019188
(71) Applicant: BEIJING YOUZHUJU NETWORK TECHNOLOGY CO. LTD., Beijing 101299 (CN)
(72) Inventor: YE, Rong, Beijing 100028 (CN); ZHANG, Dong, Beijing 100028 (CN); WANG, Mingxuan, Beijing 100028 (CN); KO, Yu Ting, Beijing 100028 (CN)
(74) Representative: Williams, Michael David
(86) International application number: PCT/CN2023/137115
(87) International publication number: WO 2024/146328

(57) **Abstract**

The present disclosure relates to a training method for a translation model, a translation method and device. Provided is a training method for a translation model, and the translation model is capable of converting data of a first type into data of a second type. The training method for a translation model comprises: applying sample data of a second type to a backtranslation model associated with the translation model to obtain training sample data, and training the translation model on the basis of the training sample data.

## Description

### CROSS-REFERENCE TO RELATED APPLICATIONS

The present disclosure is based on and claims priority to Chinese Application for Invention No. 202310019188.3, filed on January 6, 2023, the disclosure of which is incorporated by reference herein in its entirety.

### TECHNICAL FIELD

The present disclosure relates to the field of information processing and, in particular, to a method for training a translation model, and a translation method and device.

### BACKGROUND

Speech translation (ST) is currently widely used, and is mainly used for translating a speech representation in a source language, for example, words, sentences, paragraphs, or the like, in a certain language, into content in a target language, so that the content can be presented to a user in an appropriate manner. In an example implementation, speech translation aims at translating a source-language speech into target-language text, and is widely applied to various scenarios such as conference speech translation, video subtitle translation, AR-enhanced translation, etc.

### SUMMARY

This Summary is provided to introduce concepts in a brief form, the concepts will be described in detail in the following Detailed Description section. This Summary section is not intended to identify key features or essential features of the claimed technical solution, nor is it intended to be used to limit the scope of the claimed technical solution.

In a first aspect of embodiments of the present disclosure, a method for training a translation model is provided, the translation model being capable of converting first type of data into second type of data, the method including: applying second type of sample data to a back-translation model associated with the translation model to obtain training sample data, and training the translation model based on the training sample data.

In a second aspect of embodiments of the present disclosure, a translation method is provided, the translation method including: acquiring a translation model trained by the training method according to any one of the embodiments of the present disclosure, and translating first type of data into second type of data based on the acquired translation model.

In a third aspect of embodiments of the present disclosure, an apparatus for training a translation model is provided, the translation model being capable of converting first type of data into second type of data, the device including: an obtaining module configured to apply second type of sample data to a back-translation model associated with the translation model to obtain training sample data, and a training module configured to train the translation model based on the training sample data.

In a fourth aspect of embodiments of the present disclosure, a translation apparatus is provided, the apparatus including: an acquisition module configured to acquire a translation model that is trained by the translation model training method according to any one of the embodiments of the present disclosure, and a translation module configured to translate first type of data into second type of data based on the acquired translation model.

In a fifth aspect of embodiments of the present disclosure, an electronic device is provided, including: a memory; and a processor coupled to the memory, the processor being configured to execute, based on instructions stored in the memory, the method according to any one of the embodiments of the present disclosure.

In a sixth aspect of embodiments of the present disclosure, a computer-readable storage medium is provided, the computer-readable storage medium having, stored thereon, a computer program that, when executed by a processor, causes implementation of the method according to any one of the embodiments of the present disclosure.

In a seventh aspect of embodiments of the present disclosure, a computer program product is provided, including instructions that, when executed by a processor, cause implementation of the method according to any one of the embodiments of the present disclosure.

In an eighth aspect of embodiments of the present disclosure, a computer program is provided, including program codes that, when executed by a processor, cause implementation of the method according to any one of the embodiments of the present disclosure.

Other features, aspects, and advantages of the present disclosure will become apparent through the following detailed description of exemplary embodiments of the present disclosure with reference to the drawings.

### BRIEF DESCRIPTION OF THE DRAWINGS

Preferred embodiments of the present disclosure are described below with reference to the drawings. The drawings described herein are used to provide a further understanding of the present disclosure, and the drawings, together with the following detailed description, are included in this specification and form a part of the specification to explain the present disclosure. It should be understood that the drawings in the following description only relate to some embodiments of the present disclosure, and do not limit the present disclosure. In the drawings:
FIG 1 schematically illustrates a schematic conceptual diagram of a translation operation according to an embodiment of the present disclosure.
FIG 2A schematically illustrates a flowchart of a method for training a translation model according to an embodiment of the present disclosure.
FIG 2B schematically illustrates a flowchart of a translation method according to an embodiment of the present disclosure.
FIG 3A schematically illustrates a block diagram of an apparatus for training a translation model according to an embodiment of the present disclosure.
FIG 3B schematically illustrates a block diagram of a translation apparatus according to an embodiment of the present disclosure.
FIGs. 4A and 4B schematically illustrate exemplary implementations of speech translation according to embodiments of the present disclosure.
FIG 5 illustrates a block diagram of some embodiments of an electronic device of the present disclosure.
FIG 6 illustrates a block diagram of other embodiments of an electronic device of the present disclosure.

It should be understood that, for ease of description, the dimensions of the various components shown in the drawings are not necessarily drawn on actual scale. The same or similar reference numerals are used in the drawings to represent the same or similar components. Therefore, once an item is defined in a drawing, it may not be further discussed in subsequent drawings.

### DETAILED DESCRIPTION

The technical solutions in the embodiments of the present disclosure are clearly and completely described below with reference to the drawings in the embodiments of the present disclosure. Apparently, the described embodiments are merely some embodiments of the present disclosure, but not all embodiments. The following description of the embodiments is merely illustrative and is not intended to limit the present disclosure and its application or use. It should be understood that the present disclosure may be implemented in various forms and should not be construed as being limited to the embodiments set forth herein.

It should be understood that the various steps described in the method implementations of the present disclosure may be performed in different orders and/or in parallel. Furthermore, the method implementations may include additional steps and/or omit the execution of the illustrated steps. The scope of the present disclosure is not limited in this regard. Unless specifically stated otherwise, the relative arrangements of components and steps, the numerical expressions, and the values set forth in these embodiments should be construed as merely exemplary and not limiting the scope of the present disclosure.

The term "include" and variations thereof used in the present disclosure are open-ended terms that mean at least including the following elements/features, but not excluding other elements/features, i.e., "include but not limited to". In addition, the term " comprise" and variations thereof used in the present disclosure are open-ended terms that mean at least comprising the elements/features following them, but not excluding other elements/features, i.e., "comprise but not limited to". In the context of the present disclosure, "include" and "comprise" are synonymous. The term "based on" means "at least partially based on".

The terms "an embodiment", "some embodiments" or "embodiments" throughout the specification mean that a particular feature, structure, or characteristic described in conjunction with the embodiments is included in at least one embodiment of the present invention. For example, the term "an embodiment" means "at least one embodiment"; the term "another embodiment" means "at least one additional embodiment"; and the term "some embodiments" means "at least some embodiments". Moreover, the phrases "in an embodiment", "in some embodiments" or "in one embodiment" appearing in various places throughout the specification do not necessarily all refer to the same embodiment, but alternatively may also refer to the same embodiment. It should be noted that the modifications of "one" and "multiple" mentioned in the present disclosure are illustrative rather than restrictive, and those skilled in the art should understand that unless the context clearly indicates otherwise, they should be understood as "one or more".

It should be noted that concepts such as "first" and "second" mentioned in the present disclosure are only used to distinguish different apparatuses, modules, or units, and are not used to limit the sequence of functions performed by these apparatuses, modules, or units or their interdependence. Unless otherwise specified, concepts such as "first" and "second" are not intended to imply that the objects so described must be in a given order in time, space, ranking, or in any other way.

A conventional speech translation system may consist of two cascaded parts: a speech recognition (ASR) part first converts speech into a transcript in a source language, and a machine translation (MT) part translates the recognized transcript into a translation result in a target language. Each part usually performs operations using a corresponding model, such as a speech conversion model, a text translation model, etc. However, for speech data in languages that may not be transcribed or written (unwritten languages), such as Southern Min dialect and Wu dialect, it is difficult to perform ASR thereon, and it is also difficult to perform translation thereon.

A modified translation system has been proposed, which particularly, can implement direct speech translation without using transcription, and such a translation system may be referred to as a direct speech translation system, which may be particularly used to implement the translation of unwritten languages. It should be noted that such a direct speech translation system may also be applied to the translation of conventional languages. Such a translation system may also be implemented using a corresponding direct speech translation model.

However, from a data perspective, training direct speech translation often requires a large amount of <speech, transcription> parallel data. However, such training data is not only very limited for unwritten languages, but also scarce for transcribable languages in terms of speech translation data. For example, the existing largest real open-source speech translation data only has about 500 hours of data for each language. Such limited training data may result in an inability to perform model training effectively and accurately.

Therefore, it is necessary to propose an improved method to appropriately expand training samples for a speech translation model, especially a direct speech translation model.

In some embodiments of the present disclosure, it is proposed to use a back-translation technique to appropriately expand training samples for a speech translation model in a speech translation scenario. The back-translation technique may include a back-translation model constructed and matched with the speech translation model, which may be regarded as a reverse / backward implementation of a forward translation model, and which can expand the training data effectively. As an example, for the purpose of improving the performance of an English-to-Chinese (En-Zh) model, a Chinese-to-English (Zh-En) model is usually trained as a back-translation model or a back-translation part of the model. Then, a large amount of Chinese data is introduced, and a pile of English data is generated through the Zh-En model and added to the original training data as supplementary data. Therefore, training is continued based on the expanded training data, which helps improve the performance of the En-Zh model.

In addition, in speech translation, it is not easy to directly back-translate text into speech ( continuous signal inputs). On one hand, the training data and model structures of Speech-to-text (STT) and Text-to-speech (TTS) models are different, and it is relatively difficult to perform paired modeling for such models. Therefore, when the text-to-speech model is used as a back-translation model, it may not be able to generate appropriate expanded samples. On the other hand, when a model includes cascaded BT-TTS, the cascaded BT-TTS system is very complex and prone to generate error conduction problems. Moreover, the speech generated by the cascaded BT-TTS system is often mechanically monotonous, and the model may easily learn the pattern of such mechanically monotonous speeches, which cannot contribute much to diverse speech data in the real world.

Therefore, in some other embodiments of the present disclosure, in order to perform speech translation and related model training more accurately, the present disclosure proposes discretizing a model input signal. In particular, in a case where a speech signal is usually in a continuous form, a continuous speech signal representation may be discretized into signal units, for example, a discrete representation similar to text, so that an input and an output of the translation model are in the same or corresponding expression forms, thereby, the input and the output of the model are unified in forms, which can help train and use the model. In particular, this is especially suitable for applying the back-translation technique. Due to the input end and the output end have unified forms, a back-translation model can be conveniently constructed, and the back-translation model can be modeled paired/matched with the translation model (which may also be referred to as a forward translation model), for example, backward or reverse modeling. Therefore, corresponding to the forward translation case, appropriate input samples can be generated by the back-translation model for a given output, which can be used as training samples for the translation model, so that the training samples can be expanded, which further helps optimize the training of the forward translation model and improve the accuracy of the model.

On the other hand, the present disclosure further proposes improved speech translation. In particular, the training/construction of the translation model can be optimized by using the back-translation technique, and the trained/constructed translation model can be used to perform speech translation, so that more accurate speech translation, especially direct speech translation, can be obtained.

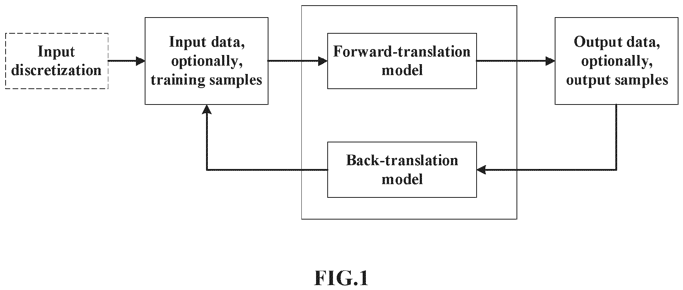

The following will describe a schematic conceptual diagram of a translation operation according to an embodiment of the present disclosure with reference to FIG 1, which schematically illustrates a training process and an application process of a translation model according to an embodiment of the present disclosure in particular.

The forward translation model may correspond to the translation model, which can translate/convert input data into output data. In particular, the input data and the output data may be different types of data. For example, the input data is speech, and the output data is text, which may correspond to the same or different languages. Of course, the input data and the output data may be the same type of data and may correspond to different languages. As an example, the translation model is a speech translation model, which can translate a speech representation into target-language speech text.

In some embodiments, optionally, in a case where the input data is a continuous speech representation, it is also possible to perform discretization processing on the input data, so as to extract speech units in discrete forms from the continuous speech representation, and translate/convert the speech units in discrete forms into a desired output using the translation model.

The back-translation model may include or indicate a model that corresponds to a model constructed in pair with the forward translation model. In particular, the back-translation model may be constructed paired with the forward translation model, and may be regarded as a reverse / backward implementation of the forward translation model. As an example, the input end of the back-translation model may be input content (for example, an output sample) of the same type as the output of the forward translation model, and the output end of the back-translation model may output content (for example, a training sample) of the same type as the input of the forward translation model, thereby being used as a training set for the training of the forward translation model, i.e., the translation model. In particular, in a case where the input of the model is input data that has been discretized, the output of the back-translation model preferably may also generate a discrete output in the same form as the input of the translation model. In an example, in a speech translation scenario, especially when the translation model translates speech into target-language text, a training text in the target language may be used as an input to the back-translation model, and the output content is in the same form as the input of the forward translation model, for example, a speech representation, especially a discretized speech unit representation, which can be used as a training sample for the translation model.

Further, after training of the translation model is optimized by using the supplementary training samples obtained by the back-translation model, the optimized translation model may be used to implement translation, for example, speech translation.

The following will describe embodiments of the present disclosure in detail with reference to the drawings, but the present disclosure is not limited to these specific embodiments. The following specific embodiments may be combined with each other, and the same or similar concepts or processes may not be repeated in some embodiments. In addition, in one or more embodiments, specific features, structures, or characteristics may be combined by those ordinary skill in the art in any suitable manner that will be clear from the present disclosure.

It should be noted that although the description of the present disclosure is mainly made by taking the training and application of the speech translation model as an example, it should be noted that the embodiments of the present disclosure may also be applied to various appropriate data processing, including but not limited to speech processing, speech-to-text translation, text-to-speech translation, speech-to-speech translation in another language, and the like, and similar beneficial technical effects may be achieved.

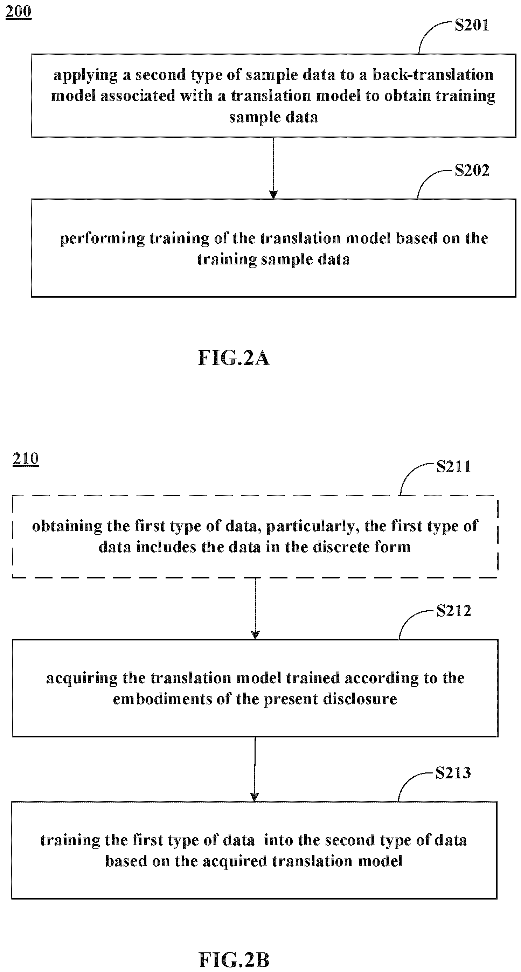

FIG 2A shows a flowchart of a method for training a translation model according to an embodiment of the present disclosure. The method may be used for various appropriate types of translation models, which can translate first type of data into second type of data.

According to the embodiments of the present disclosure, the first type may be different from the second type. In some embodiments, the first type may be one of a speech type and a text type, and the second type may be the other of the speech type and the text type. For example, the first type of data is speech data, which may be used as an input to the translation model to obtain text data as the second type of data. For another example, the first type of data and the second type of data may be in the same language or different languages. For example, the first type of data may be in Chinese, and the second type of data may be in English. Such a translation model may be any appropriate type of translation model, such as a language translation model, a text translation model, or the like, or various appropriate combinations thereof. It should be noted that the first type and the second type may also be the same type, for example, both speeches. In the translation implementation, for example, speech may be converted into an intermediate representation, for example, a text representation, and then the intermediate representation may be further converted into speech.

The method 200 includes at least the following steps. In step S201, a second type of sample data is applied to a back-translation model associated with a translation model to obtain training sample data, and in step S202, the translation model is trained based on the training sample data.

According to some embodiments of the present disclosure, the first type of data includes a speech representation, and the second type of data includes text data in a target language. According to some other embodiments of the present disclosure, the first type of data includes text data, and the second type of data includes a speech representation in a target language.

According to the embodiments of the present disclosure, the back-translation model may match the translation model, for example, correspond to each other, such as may be modeled in pair. In some embodiments, the back-translation model may include a model that is backward-constructed and matched with the translation model. The back-translation model may be implemented by various appropriate techniques, and may include various appropriate types of models, for example, various back-translation (back-translation, BT) techniques or models in machine translation. As an example, especially when the translation model is a speech translation model in a speech translation scenario, the forward translation model may be a model that translates speech to text, and the back-translation model is a model that translates text to speech reversely.

It should be noted that forward translation and back-translation mainly depend on application scenarios, and the roles may be interchanged in different application scenarios. For example, in a scenario where speech is intended to be translated into text, the translation model, i.e., the forward translation model, is a speech-to-text translation model, and the back-translation model is a text-to-speech translation model. However, in an application scenario where text is intended to be restored into speech, the aforementioned back-translation model becomes a forward translation model in this scenario, that is, translates text into speech, and the aforementioned forward translation model is implemented as a back-translation model in this scenario.

In some embodiments, the back-translation model may be located outside the translation model, i.e., not included in the translation model. For example, the back-translation model may be specially constructed for the training of the translation model, e.g., the forward translation model. In some other embodiments, the back-translation model may also be included in the translation model and form a part of the translation model. In particular, the back-translation model part may also implement a translation function per se, in addition to assisting in model training of the forward translation model part. According to another embodiment of the present disclosure, the translation model may include both a forward translation model and a back-translation model, and during an application process, both the forward translation model and the back-translation model may be used to perform respective translations, and respective training may be performed in cooperation with each other. For example, the back-translation model may assist in the training of the forward translation model, and the forward translation model may also assist in the training of the back-translation model.

According to the embodiments of the present disclosure, the input and output of the model may be in various appropriate forms. In particular, the first type of data that is the input to the model may be in a continuous form or a discrete form. For example, in the speech translation scenario, the first type of data may be a speech signal in a continuous form or a speech signal in a discrete form. In some embodiments, the speech signal in the discrete form may be obtained by discretizing the speech signal in the continuous form.

In the embodiments of the present disclosure, the continuous speech signal is speech in a continuous representation form, which may be in various appropriate forms, for example, a speech feature vector in a multi-dimensional space, where a vector value in each dimension may be a continuous value, an analog value, etc. According to the embodiments of the present disclosure, the discretization may be performed in various appropriate ways. For example, in the case of the speech translation scenario, the discretization of the speech signal in the continuous form may include converting the speech signal into discrete speech units, and the speech units may be units that characterize semantic features of the speech signal. In some embodiments of the present disclosure, the discrete data may be represented in various appropriate forms. In particular, the discrete data may be indicated by category numbers.

According to the embodiments of the present disclosure, the discretization may be implemented using a discretization module, and the discretization module may also be referred to as a discrete unit extractor, which can be used to extract discrete speech units from a continuous speech representation. The discretization module may be implemented in various appropriate ways, and as an example, may include various speech discretization techniques in the current self-supervised audio pre-training technology.

In some embodiments, the discretization may be implemented based on a vector quantization method, which, in particular, for example, may include, but not limited to, a Vector Quantized-Variational AutoEncoder (VQ-VAE) where a "Vector Quantization (VQ)" discretization manner is introduced into an audio representation; VQ-Wav2vec, Wav2vec2.0, Wav2vec-U, HuBERT, and the like. In some other embodiments, the discretization may also be implemented based on a clustering method. In particular, as an example, in the discretization processing, by classifying speech signals in continuous forms, vectorizing various features of the speech signals in a multi-dimensional space, and then categorizing the various feature vectors, discrete data converted from the speech signals can be obtained. According to the embodiments of the present disclosure, the discretization module, especially the discrete unit extractor, may also include various appropriate types of clustering methods, and in particular, any clustering method for any continuous speech representation. As an example, vectors that characterize a continuous speech representation may be clustered, including but not limited to Kmeans, kernel-Kmeans, Kmeans++, PCA, DBSCAN, hierarchical clustering, etc.

In some embodiments, the discretization processing may be performed by the translation model itself. For example, in the case of the speech translation scenario, the translation model may further include the discretization module, which converts the input continuous speech signal into speech data in a discrete form or extracts speech data in a discrete form from the continuous speech signal, thereby performing speech-to-text translation. In some other embodiments, the discretization module may be located outside the translation model, and may discretize a to-be-translated speech signal, and the obtained discrete speech data is input into the speech translation model as the first type of data.

According to the embodiments of the present disclosure, the translation model may have various appropriate structures. In particular, depending on the type and form of the input to the translation model, the translation model may include an appropriate structure. Correspondingly, the back-translation model may also be constructed or set correspondingly, especially to match the entire of or a part of the translation model.

In some embodiments, in a direct speech translation scenario, where the translation model may include a direct speech translation model capable of directly translating a speech signal, especially a speech signal in a discrete form, into a text in a target language, the back-translation model may be constructed matched with the translation model. In particular, the back-translation model includes a model that directly back-translates the text in the target language into a speech signal, especially a speech signal in a discrete form. In some other embodiments, in a speech translation scenario, where the input to the translation model is a continuous speech signal, and the translation model includes a discretization module and a translation module that translates speech data in discrete form into a text in a target language, the back-translation model may include a model that is backward-constructed and matched with the translation module, and that can obtain, from training texts in the target language as the second type of sample data, speech data in discrete form as the training sample data. In some further embodiments, where the input to the translation model is a continuous speech signal, and the translation model includes a discretization module, a speech conversion module that converts speech data in discrete form into intermediate text data, and a machine translation module that converts the intermediate text data into a text in a target language, the back-translation model may include a model that is backward constructed and matched with the machine translation module, and that can obtain, from training texts in the target language as the second type of sample data, specific text data as the training sample data. Of course, the back-translation model may also include parts corresponding to the machine translation module and the speech conversion module. For example, the back-translation model may include a part for back-translating a text in the target language into an intermediate text, and a part for back-translating the intermediate text into a speech signal, especially a discrete speech signal.

According to the embodiments of the present disclosure, the translation model for speech translation or the translation module therein may be implemented by various appropriate models, such as various "black box" models, which may perform model implementation by learning input data and output data, for example, input sample data and output sample data. Such a model may be a model in various appropriate forms, such as a regression model, such as various types of regression models, such as a linear regression model, etc.

According to the embodiments of the present disclosure, in the model training, the training may be performed mainly based on the sample data obtained through the back-translation model. In some embodiments, applying the second type of sample data to the back-translation model associated with the translation model to obtain the training sample data may include using the second type of sample data as an input to the back-translation model to obtain model output data, and using the model output data or data obtained after processing the model output data as the training sample data, where the processing of the model output data includes a processing that generates a data perturbation.

In particular, in some embodiments, the sample data obtained through the back-translation model may be directly used for training, or the sample data obtained through the back-translation model may be processed appropriately, for example, subjected to decoding, or any processing that helps to generate or increase sample data perturbation, including but not limited to appropriate decoding, randomly deleting some data, doping optional data, appropriate data interpolation, etc., so that the sample data obtained through the back-translation model is perturbed, and then the model training is performed based on the perturbed sample data. In some other embodiments, it is also possible to create an initial training set before the training, and then during the training, the sample data obtained through the back-translation model or the sample data that has been processed appropriately can serve as expansion of the initial training set, so that the training data for the model training can be further expanded. As an example, the initial training set may also be training data in a discrete form, which may be combined with the sample data in the discrete form obtained by the back-translation model, to obtain richer training data.

According to the embodiments of the present disclosure, the model training may be performed in various appropriate ways, which depends on the type of the translation model itself, and will not be described in detail here. As an example, the training sample data may be used as an input, for example, the sample data generated by the back-translation model and/or the initial training set may be used as an input, and the output sample may be used as an output, to perform the model training and optimize the setting of the model parameters.

According to the embodiments of the present disclosure, the model training may be performed iteratively. In particular, the obtaining of the first type of sample data through the back-translation model and the model training based on the first type of sample data can be iteratively performed, until a specific iteration termination condition is satisfied. The iteration termination condition may be any of various appropriate model training termination conditions, such as the training times reaching a specific threshold, a model-related performance indicator meeting a specific performance threshold requirement, a variation of model performance being less than a specific variation range after a specific training times, and so on, which will not be described in detail here.

In some embodiments, both the forward translation model and the back-translation model may be trained concurrently, especially iteratively, therefore, both an improved forward translation model and an improved back-translation model can be obtained, and can be applied to respective application scenarios, respectively. In particular, the translation model may include both the forward translation model and the back-translation model. For example, in an application scenario where a speech representation is translated into a text, a text-to-speech back-translation model may be used to assist in training a speech-to-text forward translation model and performing speech translation, meanwhile, the trained text-to-speech back-translation model may also be used to translate/restore specific texts into speeches, for example, to obtain speech units, and then input the speech units into a speech encoder/restorer to obtain speeches.

On the other hand, the present disclosure proposes an improved method for speech translation, especially a method for unwritten speech interpretation. The method may be implemented based on a model for speech translation generated according to the embodiments of the present disclosure. In particular, the above trained model for speech translation may be used.

FIG 2B shows a method for speech translation according to an embodiment of the present disclosure. The method 210 includes the following steps S212 and S213. At step S212, the translation model trained according to the embodiments of the present disclosure may be acquired. The operation performed in this step may be performed as described above, and will not be described in detail here. At step S213, the first type of data is translated into the second type of data based on the acquired translation model. In particular, a speech translation model may be obtained, and the speech representation may be translated into the text input in the target language.

According to the embodiments of the present disclosure, the input to the translation model may also be data in a discrete form. In particular, the discretization processing may be performed on the input data before the translation model is used. In some embodiments, the method 210 may further include step S211: obtaining the first type of data, particularly, the first type of data includes the data in the discrete form. For example, step S211 may include performing the discretization processing on the input data to obtain the data in the discrete form. As an example, in a case where the translation model is used for the translation of continuous speech representations in the speech translation scenario, the discretization processing may be performed on the continuous speech representation, so that the discrete speech data can be obtained, and then the discrete speech data can be translated/converted. The discretization processing may be performed as described above, and will not be described in detail here.

It should be noted that although, as described above, the operation of discretizing speech data may be included in the method 210 of the present disclosure and used as step S211, it should be noted that this step is not necessary. Even without this step, the technical solution of the method according to the present disclosure is still complete and can achieve beneficial technical effects. Therefore, step S211 is indicated by dotted lines in the drawings. In particular, the discretization step may be located outside the translation method according to the present disclosure, for example, may be located outside the translation model, and implemented by other appropriate modules and devices.

In the solution of the present disclosure, the expansion of the training samples for the translation model can be optimized by introducing the back-translation model, so that a larger number of training samples with more diversity are obtained, and the training of the translation model is further improved. In particular, in the case where a speech representation is translated into a text in a target language, a large amount of easily accessible texts in the target language may be used to obtain corresponding speech data as training samples for the speech translation model, through the Discrete Unit Back-translation (DUB) technique in a natural, simple, and efficient manner, so that the model training result can be improved, a more accurate speech translation model can be obtained, and then the effect of direct speech translation can be improved.

On the other hand, in the solution of the present disclosure, the discretization processing on the input to the translation model is proposed, which is especially advantageous for the speech translation scenario, especially for the scenario where the continuous speech representation is intended to be translated. In particular, discrete units are extracted from the speech representation, and the extraction process of the discrete units may be obtained through unsupervised learning. Therefore, this technique does not depend on the written/transcript text, and the speech translation, especially the direct speech translation for unwritten languages, can be well improved.

In yet another aspect, the solution of the present disclosure, for the first time, proposes a translation model structure which is particularly suitable for speech translation, especially direct speech translation, especially untranscribable-speech translation. The model structure may include a combined structure of a discrete unit extractor and a translation module, or a combined structure of a discretization module, a speech translation (ST) module, and a machine translation (MT) module, which realizes the optimization of the translation model structure. In particular, the solution of the present disclosure, for the first time, proposes that after a speech in the source language is discretized using the discrete unit extractor, the structures of the ST and MT model frameworks can be unified.

The data processing, especially the model training and the model application, according to the embodiments of the present disclosure may be performed in various appropriate manners. In some examples, the data processing may be performed in a centralized manner, for example, by a single processing device or apparatus, such as various types of servers, processors, graphics processing units (CPUs), etc. In other examples, the data processing may be performed in a distributed manner, for example, may be performed in a distributed manner on a plurality of computing nodes, at least one of the computing nodes includes various types of servers, processors, graphics processing units (CPUs), etc., and a part of the data processing is performed on each computing node.

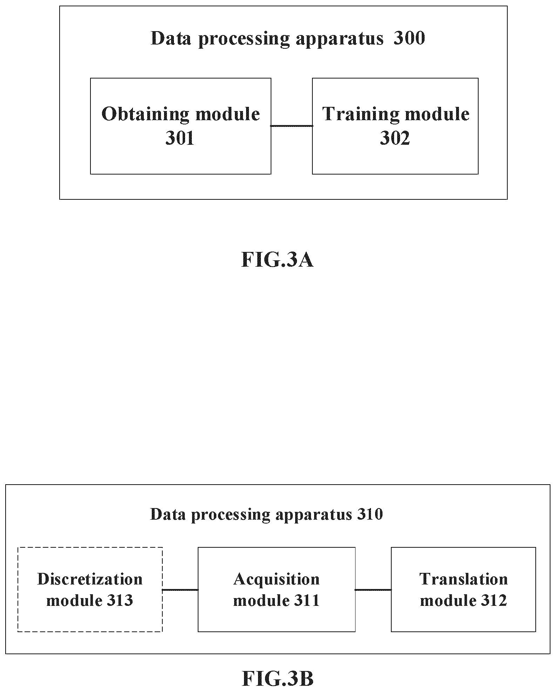

FIG 3A shows a block diagram of a data processing apparatus according to an embodiment of the present disclosure. The data processing apparatus may also be referred to as a translation model training apparatus, and the translation model may convert first type of data into second type of data. The apparatus 300 includes an obtaining module 301 configured to apply second type of sample data to a back-translation model associated with the translation model to obtain training sample data, and a training module 302 configured to train the translation model based on the training sample data.

FIG 3B shows a block diagram of a data processing apparatus according to an embodiment of the present disclosure. The data processing apparatus may also be referred to as a translation apparatus, which may apply a translation model trained according to the embodiments of the present disclosure to perform translation. The apparatus 310 includes an acquisition module 311 configured to acquire a translation model that is trained by the translation model training method according to the embodiments of the present disclosure, and a translation module 312 configured to translate first type of data into second type of data based on the acquired translation model.

In particular, in a case where a continuous speech signal is intended to be converted into a text in a target language, the apparatus 310 may further include a discretization module 313, which may be configured to discretize the continuous speech signal into speech data in discrete form, and the speech data in discrete form may be used as the first type of data and input into the translation module for translation. It should be noted that the discretization module is not necessarily to be included in the translation apparatus, and may be located outside the translation apparatus, and the generated speech data in discrete form may be provided to the translation apparatus. Therefore, the discretization module is indicated by dotted lines.

It should be noted that the operations or processing performed by the above apparatus and the various modules included therein may be performed as described above, for example, may be performed as the operations or processing in the corresponding steps described above, and will not be described in detail here.

It should be noted that the above modules are merely logical modules divided according to the specific functions they implement, and are not intended to limit the specific implementation manners. For example, the above modules may be implemented in software, hardware, or a combination of software and hardware. In actual implementation, the above modules may be implemented as independent physical entities, or may also be implemented by a single entity (for example, a processor (CPU or DSP, etc.), an integrated circuit, etc.). In addition, the above modules are shown in dotted lines in the drawings, which indicates that these modules may not actually exist, and the operations/functions implemented by them may be implemented by the processing circuit itself. In particular, depending on the processing process according to the embodiments of the present disclosure, these modules may be implemented in a centralized manner or in a distributed manner.

In addition, although not shown, the apparatus may also include a memory, which may store various information generated by the apparatus and the various modules included in the apparatus during the operation, programs and data for the operation, data to be sent by the communication unit, and the like. The memory may be a volatile memory and/or a non-volatile memory. For example, the memory may include, but is not limited to, a random-access memory (RAM), a dynamic random-access memory (DRAM), a static random-access memory (SRAM), a read-only memory (ROM), a flash memory. Of course, the memory may also be located outside the apparatus. Optionally, although not shown, the apparatus may also include a communication module, which may be used to communicate with other apparatuses. In an example, the communication unit may be implemented in an appropriate manner known in the art, for example, including communication components such as an antenna array and/or a radio frequency link, various types of interfaces, communication units, etc. This will not be described in detail here. In addition, the apparatus may further include other components not shown, such as a radio frequency link, a baseband processing unit, a network interface, a processor, a controller, etc. This will not be described in detail here.

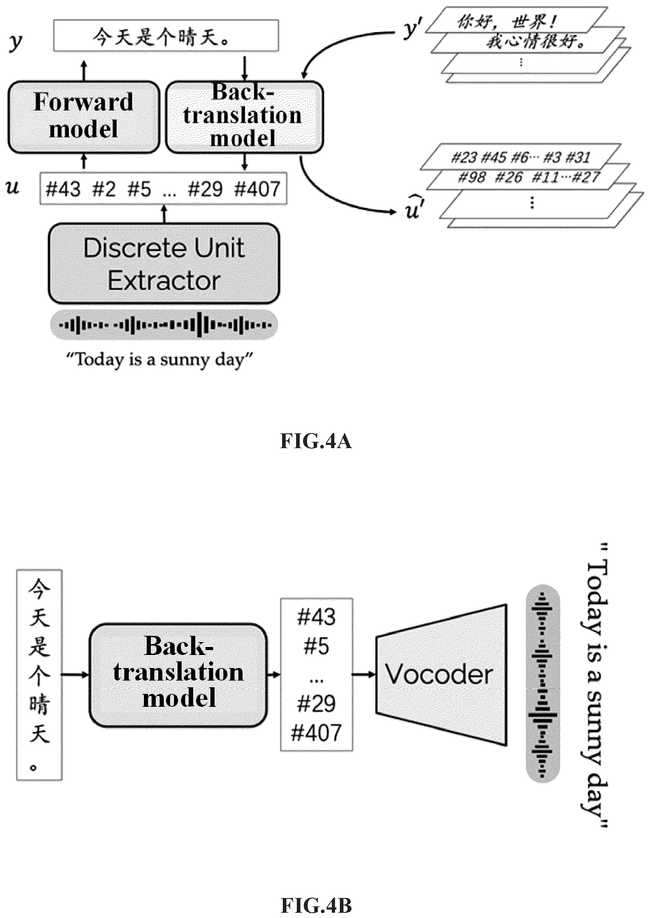

The following will describe an example process of speech data translation processing according to an embodiment of the present disclosure in detail with reference to FIGs. 4A and 4B. In particular, the speech data translation processing involves translation processing of a continuous speech signal, where it is proposed to use a back-translation method to train a translation model. More particularly, the embodiments of the present disclosure further propose performing discretization processing on an input speech representation in an application process of the translation model.

FIG 4A shows a structure of a translation model combined with a back-translation structure according to an embodiment of the present disclosure, where the left side of the figure shows the model structure, which can convert a continuous speech signal into a text in a target language, where the model structure includes a discrete unit extractor and a forward translation model part.

In operation, for an input continuous speech signal "Today is a sunny day", speech units in discrete form are first extracted from the continuous speech signal through the discrete unit extractor as discrete units, and indicated in an appropriate form. As an example, the present disclosure may use a so-called HuBERT, where a continuous representation is learned through mask-predict pre-training, and then is clustered through a K-means algorithm to obtain discrete units. The categories of the extracted discrete units are represented by #1, #2,....

Then, the discrete units are translated into the text in the target language " 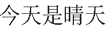 " through the forward translation model part.

The right side of the figure shows the application of the back-translation technique. A large amount of text data in the target language may be introduced, and then be used to create a large amount of speech data in a discrete form, e.g., discrete units, through the back-translation technique. The discrete units created in this way may then be used for model training, e.g., the training of the forward translation model, or the training of both the forward translation model and the back-translation model.

The forward translation model and the back-translation model may be constructed in a matching manner or in a paired manner, and may adopt various appropriate structures. For example, a neural network structure commonly used in text machine translation may be used to train a unit->translation model (corresponding to the forward translation on the left side in FIG 4A) and a translation-> unit model (corresponding to the back-translation on the right side in FIG 4A) separately. It should be noted that the forward translation model of unit->translation has the capability of completing speech translation per se, but the translation effect is not particularly good/idiomatic.

In the process of model training, a forward translation model and a back-translation model may be set initially, or may be performed initially, and then the back-translation technique is applied to further optimize the training of the forward translation model and/or the back-translation model, so as to obtain the further optimized forward translation model and/or back-translation model.
- As an example, based on the above forward translation and back-translation models, an algorithm flow of the Discrete Unit Back-translation (DUB) technique may be as follows:
   ∘ Step 1: introduce a large amount of target-language text data y'.
   ∘ Step 2: use the back-translation model to create a large number of pseudo-discrete units: ***û*' *= Backward*(*y'*)**

▪ The decoding process of ***û***' includes, but is not limited to: Greedy, Beam search, top-k sampling, sampling, or the like, it is also possible to randomly delete some units (e.g., #1, #25...) from the generated unit sequence. In short, any operation that causes a perturbation to ***û***' is allowed.
   ∘ Step 3: add ***D̃*** = (***û***'^{,}***y***') to the original ***D*** = (***u***^{,}***y***) for retraining, that is, use ***D*** ∪ ***D̃*** to optimize the forward translation model.

In this way, additional training samples can be effectively created through the back-translation model, thereby providing more versatile and expanded training samples for the forward translation model, so that the model training can be improved. This is especially suitable for the translation of unwritten languages.

It should be noted that the structure of the model can unify speech translation and text machine translation, so various appropriate machine translation (MT) techniques may be implemented in the system, including but not limited to various techniques for pre-training one or both of the forward translation model and the back-translation model concurrently.

In addition, various appropriate back-translation techniques, such as back-translation techniques applicable in machine translation, can also be used, including but not limited to a Tagged back-translation technique, where a discrete unit sequence obtained through back-translation can be appended with a special identifier <b-unit> #2 #24 #52..., and then added to the training set, which helps improve the performance of forward translation. In addition, the model training may also be performed iteratively, especially the back-translation process may be performed iteratively, that is, the above process of generating data through back-translation is iterated continuously.

It should be noted that the above model structure may also be extended to fulfill a text-to-speech (TTS) conversion task, as shown in FIG. 4B. As an example, a vocoder may be connected following the back-translation model, so that speech can be restored. In particular, by using the trained text-to-discrete unit back-translation model, discrete units may be obtained, and then may be input into an additionally trained vocoder, so that speech can be restored, and the text-to-speech translation task can be fulfilled. The vocoder may be of various appropriate structures, for example, a Hifi-GAN model which is well-known in the field of current TTS.

Such a TTS translation technique can help visually impaired people to understand the content in more languages. For example, the TTS technology can help visually impaired people to hear the voice in their native language or understand foreign cultures.

It should be noted that the above description is merely exemplary, and the technology in the embodiments of the present disclosure is not limited to "translation", but may also be applied to convert the translation text in "target language" to the transcription text in "source language". In this case, the task corresponding to the model in FIG. 4A is speech recognition (ASR), and the task corresponding to FIG. 4B is speech synthesis (TTS).

The following uses the MuSTC English-to-German translation as an example to illustrate the beneficial effects that can be achieved by the solutions of the embodiments of the present disclosure. The following table lists comparison between the embodiments of the present disclosure and some current speech translation models. Among them, speech-transformer represents a currently commonly used speech translation baseline model, and Unit2de w/o DUB represents a unit2de translation model without using the back-translation technique.

| Model | Number of additional German texts added | Test BLEU |
|---|---|---|
| speech-transformer | None | 19.91 |
| Unit2de w/o DUB | None | 20.9 |
| Unit2de w/ DUB using the back-translation technique according to the present disclosure | 1M | 22.72 |
| | 5M | 23.4 |
| | 10M | 24.46 |

In the above table, TestBLEU is used as an indicator to evaluate the effect. TestBLEU indicates a Bilingual Evaluation Understudy (BLEU) indicator on a test set. BLEU is a commonly used automatic evaluation indicator in machine translation, which can be understood as an accuracy score. BLEU values are usually expressed as percentage values, and the larger the value, the higher the accuracy and the better the translation quality.

It can be seen from the data in the table that in the solution of using the back-translation technique according to the present disclosure, additional German texts may be added for translation, and the translation performance can be significantly improved. For example, for the task of translating from English speech to German text, the BLEU of the model without using the back-translation is 20.9, while in the embodiments of the present disclosure, by adding German texts, the BLEU can be increased to at least 22.72, and the more the number of added German texts, the more the improvement of BLEU. When 10 million German texts are added, the BLEU can be enhanced to 24.46, which can achieve an increasement of 3.6 points.

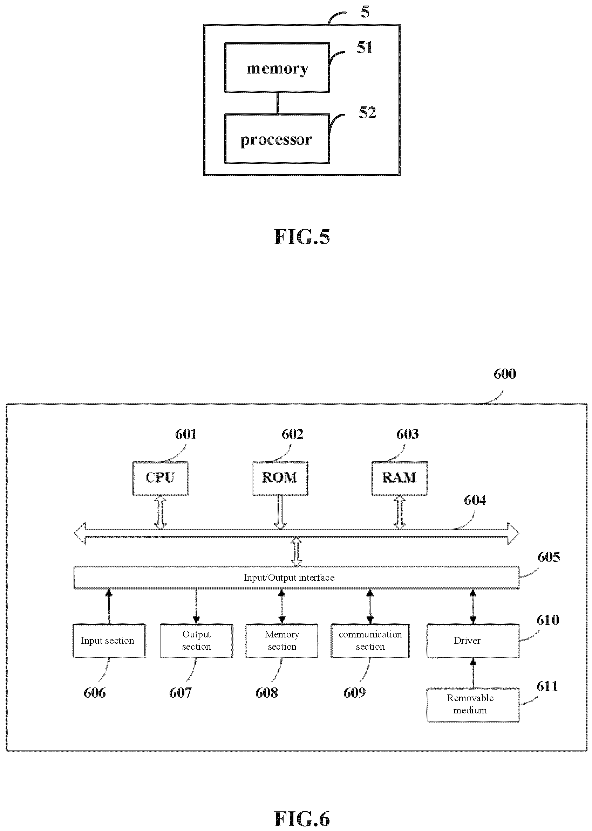

Some embodiments of the present disclosure further provide an electronic device, which can be operated to implement the operations/functions of the aforementioned model pre-training apparatus and/or model training apparatus. FIG 5 shows a block diagram of some embodiments of an electronic device of the present disclosure. For example, in some embodiments, the electronic device 5 may be various types of devices, including but not limited to mobile terminals such as a mobile phone, a laptop, a digital broadcast receiver, a PDA (Personal Digital Assistant), a PAD (tablet computer), a PMP (Portable Multimedia Player), an in-vehicle terminal (such as an in-vehicle navigation terminal), etc., and fixed terminals such as a digital TV, a desktop computer, etc. For example, the electronic device 5 may include a display panel for displaying data utilized in and/or execution results achieved by the solutions of the present disclosure. For example, the display panel may be in various shapes, such as a rectangular panel, an elliptical panel, or a polygonal panel, etc. In addition, the display panel may be not only a flat panel, but also a curved panel, or even a spherical panel.

As shown in FIG 5, the electronic device 5 of this embodiment includes a memory 51 and a processor 52 coupled to the memory 51. It should be noted that the components of the electronic device 50 shown in FIG 5 are only exemplary, and not limiting. According to the needs of actual applications, the electronic device 50 may also have other components. The processor 52 can control other components in the electronic device 5 to perform desired functions.

In some embodiments, the memory 51 is used to store one or more computer-readable instructions. The processor 52 is used to run the computer-readable instructions, and the computer-readable instructions, when running by the processor 52, implement the method according to any of the above embodiments. For specific implementation of each step of the method and related explanations, reference may be made to the above embodiments, and repetitions will not be elaborated here.

For example, the processor 52 and the memory 51 may communicate directly or indirectly with each other. For example, the processor 52 and the memory 51 may communicate via a network. The network may include a wireless network, a wired network, and/or any combination of a wireless network and a wired network. The processor 52 and the memory 51 may also communicate with each other through a system bus, which is not limited in the present disclosure.

For example, the processor 52 may be embodied as various appropriate processors, processing devices, etc., such as a central processing unit (CPU), a graphics processing unit (GPU), a network processing unit (NP), etc.; and may also be a digital signal processor (DSP), an application-specific integrated circuit (ASIC), a field-programmable gate array (FPGA) or other programmable logic devices, discrete gate or transistor logic devices, discrete hardware components. The central processing unit (CPU) may be an X86 or ARM architecture, etc. For example, the memory 51 may include any combination of various forms of computer-readable storage media, such as volatile memory and/or non-volatile memory. The memory 51 may include, for example, system memory, and the system memory may store, for example, an operating system, applications, a boot loader, a database, and other programs, etc. Various applications and various data may also be stored in the storage medium.

In addition, according to some embodiments of the present disclosure, when various operations/processes according to the present disclosure are implemented through software and/or firmware, programs that constitute the software may be installed from a storage medium or a network to a computer system having a dedicated hardware structure, such as a computer system 600 shown in FIG 6, and the computer system, when installed with various programs, can perform various functions, including functions such as those described above. FIG 6 is a block diagram showing an example structure of a computer system that may be used in the embodiments of the present disclosure.

In FIG. 6, a central processing unit (CPU) 601 executes various processes according to a program stored in a read-only memory (ROM) 602 or a program loaded from a storage section 608 to a random-access memory (RAM) 603. In the RAM 603, data required when the CPU 601 performs various processes and the like is also stored as required. The central processing unit is only exemplary, and it may also be other types of processors, such as various processors described above. The ROM 602, the RAM 603, and the storage section 608 may be various forms of computer-readable storage media, as described below. It should be noted that although the ROM 602, the RAM 603, and the storage device 608 are shown separately in FIG 6, one or more of them may be combined or located in the same or different memories or storage modules.

The CPU 601, ROM 602, and RAM 603 are connected to each other via a bus 604. An input/output interface 605 is also connected to the bus 604.

The following components are connected to the input/output interface 605: an input section 606, such as a touchscreen, a touchpad, a keyboard, a mouse, an image sensor, a microphone, an accelerometer, a gyroscope, etc.; an output section 607, including a display, such as a cathode ray tube (CRT), a liquid crystal display (LCD), a speaker, a vibrator, etc.; a storage section 608, including a hard disk, a magnetic tape, etc.; and a communication section 609, including a network interface card, such as a LAN card, a modem, etc. The communication section 609 allows communication processing to be performed via a network such as the Internet. It is easy to understand that although it is shown in FIG 6 that the various apparatuses or modules in the electronic device 600 communicate through the bus 604, they may also communicate through a network or other means, where the network may include a wireless network, a wired network, and/or any combination of a wireless network and a wired network.

If necessary, a driver 610 is also connected to the input/output interface 605. A removeable medium 611, such as a magnetic disk, an optical disk, a magneto-optical disk, a semiconductor memory, etc., is mounted on the driver 610 as required, so that a computer program read from the removeable medium 611 can be installed into the storage section 608 as required.

In a case where the above processing is implemented by software, the programs that form the software may be installed from a network such as the Internet or a storage medium such as the removeable medium 611.

According to the embodiments of the present disclosure, the process described above with reference to the flowchart may be implemented as a computer software program. For example, the embodiments of the present disclosure include a computer program product, which includes a computer program carried on a computer-readable medium, and the computer program includes program codes for executing the method according to the embodiments of the present disclosure. In such an embodiment, the computer program may be downloaded and installed from the network through the communication device 609, or installed from the storage device 608, or installed from the ROM 602. When the computer program is executed by the CPU 601, the above functions defined in the method of the embodiments of the present disclosure are executed.

It should be noted that in the context of the present disclosure, the computer-readable medium may be a tangible medium that may include or store a program for use by or in combination with an instruction execution system, apparatus, or device. The computer-readable medium may be a computer-readable signal medium or a computer-readable storage medium, or any combination of the two. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program that may be used by or in combination with an instruction execution system, apparatus, or device. In the present disclosure, the computer-readable signal medium may include a data signal propagated in a baseband or as a part of a carrier, and computer-readable program code is carried therein. The propagated data signal may take many forms, including but not limited to an electromagnetic signal, an optical signal, or any suitable combination thereof. The computer-readable signal medium may also be any computer-readable medium other than the computer-readable storage medium, and the computer-readable signal medium may send, propagate, or transmit the program for use by or in combination with the instruction execution system, apparatus, or device. The program codes contained on the computer-readable medium may be transmitted via any suitable medium, including but not limited to an electrical wire, an optical cable, RF (radio frequency), etc., or any suitable combination of the above.

The above computer-readable medium may be included in the above electronic device; or may exist alone without being assembled into the electronic device.

In some embodiments, a computer program is further provided, including: instructions that, when executed by a processor, cause the processor to perform the method of any of the above embodiments. For example, the instructions may be embodied as computer program codes.

In the embodiments of the present disclosure, computer program codes for performing the operations of the present disclosure may be written in one or more programming languages or a combination thereof. The above programming languages include but not limited to object-oriented programming languages such as Java, Smalltalk, and C++, and also include conventional procedural programming languages such as "C" language or similar programming languages. The program code may be executed entirely on a user computer, partly on a user computer, as a stand-alone software package, partly on a user computer and partly on a remote computer, or entirely on a remote computer or a server. In the case of a remote computer, the remote computer may be connected to the user computer through any type of network (including a local area network (LAN) or a wide area network (WAN)), or may be connected to an external computer (for example, through the Internet using an Internet service provider).

The flowcharts and block diagrams in the drawings illustrate possible architecture, functions, and operations of the system, method, and computer program product according to various embodiments of the present disclosure. In this regard, each block in the flowchart or block diagram may represent a module, a program segment, or a part of codes, and the module, the program segment, or the part of codes include one or more executable instructions for implementing specified logical functions. It should also be noted that, in some alternative implementations, the functions marked in the blocks may also occur in a different order than the order marked in the drawings. For example, two blocks shown in succession may actually be executed substantially in parallel, and they may sometimes be executed in a reverse order, which depends on the functions involved. It should also be noted that each block in the block diagram and/or flowchart, and the combination of blocks in the block diagram and/or flowchart, may be implemented by a dedicated hardware-based system that performs specified functions or operations, or may be implemented by a combination of dedicated hardware and computer instructions.

The modules, components, or units involved in the embodiments of the present disclosure may be implemented in software or hardware. The name of a module, component, or unit does not constitute a limitation on the module, component, or unit itself under certain circumstances.

The functions described herein above may be performed at least in part by one or more hardware logic components. For example, without limitation, exemplary hardware logic components that may be used include: a field-programmable gate array (FPGA), an application-specific integrated circuit (ASIC), an application-specific standard product (ASSP), a system-on-chip (SOC), a complex programmable logic device (CPLD), etc.

The present disclosure may be implemented in any form described herein, including but not limited to the following enumerated example embodiments, which describe the structures, features, and functions of some parts of the embodiments of the present invention.

According to some embodiments of the present disclosure, a method for training a translation model is provided, the translation model being capable of converting first type of data into second type of data, the method including: applying second type of sample data to a back-translation model associated with the translation model to obtain training sample data, and training the translation model based on the training sample data.

According to some embodiments of the present disclosure, the first type is one of a speech type and a text type, and the second type is the other of the speech type and the text type.

According to some embodiments of the present disclosure, both the first type of data and the training sample data are speech data in discrete form.

According to some embodiments of the present disclosure, the first type of data is a continuous speech signal, and the training sample data is speech data in discrete form.

According to some embodiments of the present disclosure, the back-translation model includes a model that is backward constructed and matched with the translation model.

According to some embodiments of the present disclosure, the first type of data includes a continuous speech signal, and the translation model includes a discretization module configured to extract speech data in discrete form from the continuous speech signal, and a translation module configured to translate the speech data in the discrete form into a text in a target language as the second type of data.

According to some embodiments of the present disclosure, the back-translation model includes a model that is backward constructed and matched with the translation module, which can obtain, from training texts in the target language as the second type of sample data, speech data in the discrete form as the training sample data.

According to some embodiments of the present disclosure, the first type of data includes a continuous speech signal, and the translation model includes a discretization module configured to extract speech data in discrete form from the continuous speech signal, a speech conversion module configured to convert the speech data in the discrete form into intermediate text data, and a machine translation module configured to convert the intermediate text data into in a text in a target language as the second type of data.

According to some embodiments of the present disclosure, the back-translation model includes a model that is backward constructed and matched with the machine translation module, which can obtain, from training texts in a target language as the second-type sample data, specific text data as the training sample data.

According to some embodiments of the present disclosure, training the translation model based on the training sample data includes: training the translation model using the training sample data as an input and the second type of sample data as an output.

According to some embodiments of the present disclosure, the method further includes: training the back-translation model concurrently with the training of the translation model.

According to some embodiments of the present disclosure, the obtaining of the training sample data and the model training are iteratively performed until a specific iteration termination condition is satisfied.

According to some embodiments of the present disclosure, a translation method is provided, the method including: acquiring a translation model trained by the translation model training method according to any one of the embodiments of the present disclosure, and translating first type of data into second type of data based on the acquired translation model.

According to some embodiments of the present disclosure, the first type of data is a continuous speech signal, and the translation method further includes: performing discretization processing on a continuous speech representation to obtain speech data in discrete form, and translating the speech data in the discrete form into text data in a target language based on the translation model.

According to some embodiments of the present disclosure, an apparatus for training a translation model is provided, the translation model being capable of converting first type of data into second type of data, the apparatus including: an obtaining module configured to apply second-type sample data to a back-translation model associated with the translation model to obtain training sample data, and a training module configured to train the translation model based on the training sample data.

According to some embodiments of the present disclosure, a translation apparatus is provided, the apparatus including: an acquisition module configured to obtain a translation model that is trained by the translation model training method according to any one of the embodiments of the present disclosure, and a translation module configured to translate first type of data into second type of data based on the acquired translation model.

According to still further embodiments of the present disclosure, an electronic device is provided, including: a memory; and a processor coupled to the memory, where the memory has, stored therein, executable instructions that, when executed by the processor, cause the electronic device to perform the method according to any one of the embodiments of the present disclosure.

According to still further embodiments of the present disclosure, a computer-readable storage medium is provided, having, stored thereon, a computer program that, when executed by a processor, implements the method according to any one of the embodiments of the present disclosure.

According to still further embodiments of the present disclosure, a computer program is provided, including: instructions that, when executed by a processor, cause the processor to execute the method according to any one of the embodiments of the present disclosure.

According to some embodiments of the present disclosure, a computer program product is provided, including instructions that, when executed by a processor, implement the method according to any one of the embodiments of the present disclosure.

The above description is only for some embodiments of the present disclosure and the description of the technical principles used. Those skilled in the art should understand that the scope of disclosure involved in the present disclosure is not limited to the technical solutions formed by the specific combination of the above technical features, but also covers other technical solutions formed by any combination of the above technical features or their equivalent features without departing from the above disclosed concept. For example, a technical solution formed by replacing the above features with the technical features having similar functions disclosed in the present disclosure (but not limited to).

In the description provided herein, many specific details are set forth. However, it is understood that the embodiments of the present disclosure may be implemented without these specific details. In other cases, in order not to obscure the understanding of the description, well-known methods, structures and techniques are not shown in detail.

In addition, although various operations are depicted in a specific order, this should not be understood as requiring these operations to be performed in the specific order shown or in a sequential order. Under certain circumstances, multitasking and parallel processing may be advantageous. Similarly, although several specific implementation details are included in the above discussion, these should not be construed as limiting the scope of the present disclosure. Certain features that are described in the context of separate embodiments may also be implemented in combination in a single embodiment. On the contrary, various features described in the context of a single embodiment may also be implemented in multiple embodiments separately or in any suitable sub-combination.
Although some specific embodiments of the present disclosure have been described in detail through examples, those skilled in the art should understand that the above examples are only for illustration, and are not intended to limit the scope of the present disclosure. Those skilled in the art should understand that the above embodiments may be modified without departing from the scope and spirit of the present disclosure. The scope of the present disclosure is defined by the appended claims

## Claims

1. A method for training a translation model, the translation model being capable of converting first type of data into second type of data, the method comprising:
applying second type of sample data to a back-translation model associated with the translation model to obtain training sample data; and
training the translation model based on the training sample data.

2. The method according to claim 1, wherein the first type is one of a speech type and a text type, and the second type is the other of the speech type and the text type.

3. The method according to claim 1, wherein the first type of data and the training sample type are both speech data in discrete form.

4. The method according to claim 1, wherein the first type of data is a continuous speech signal, and the training sample data is speech data in discrete form.

5. The method according to claim 1, wherein the back-translation model comprises a model that is backward-constructed and matched with the translation model.

6. The method according to any one of claims 1 to 5, wherein applying the second type of sample data to the back-translation model associated with the translation model to obtain the training sample data, comprises:
using the second type of sample data as an input to the back-translation model, to obtain model output data; and
the model output data or data obtained after processing the model output data are used as the training sample data, wherein the processing of the model output data comprises processing that generates data perturbation.

7. The method according to claim 1, wherein the first type of data comprises a continuous speech signal, and the translation model comprises:
a discretization module configured to extract speech data in discrete form from the continuous speech signal; and
a translation module configured to convert the speech data in discrete form into a text in a target language as the second type of data.

8. The method according to claim 7, wherein the back-translation model comprises a model that is backward-constructed and matched with the translation unit, and the model is capable of obtaining, from training texts in the target language as the second type of sample data, speech data in discrete form as the training sample data.

9. The method according to claim 8, wherein the first type of data comprises a continuous speech signal, and the translation model comprises:
a discretization module configured to extract speech data in discrete form from the continuous speech signal;
a speech conversion module configured to convert the speech data in discrete form into intermediate text data; and
a machine translation module configured to convert the intermediate text data into a text in a target language as the second type of data.

10. The method according to claim 9, wherein the back-translation model comprises a model that is backward-constructed and matched with the machine translation module, and the model is capable of obtaining, from training texts in the target language as the second type of sample data, specific text data as the training sample data.

11. The method according to any one of claims 7 to 10, wherein the discretization module is configured to extract the speech data in discrete form from the continuous speech signal based on a vector quantization method and/or a clustering method.

12. The method according to any one of claims 1 to 5, wherein the training the translation model based on the training sample data comprises:
training the translation model with the training sample data as an input and the second type of sample data as an output.

13. The method according to claim 1, further comprising:
performing training of the back-translation model in parallel with the training of the translation model.

14. The method according to claim 1 or 13, wherein the obtaining the training sample data and the model training are iteratively performed, until a specific iteration termination condition is satisfied.

15. A translation method, the method comprising:
acquiring a translation model trained by the method according to any one of claims 1 to 14; and
translating first type of data into second type of data based on the acquired translation model.

16. The method according to claim 15, wherein the first type of data is a continuous speech signal, and the method further comprises:
performing discretization processing on the continuous speech representation to obtain speech data in discrete form; and
translating the speech data in discrete form into text data in a target language based on the translation model.

17. An apparatus for training a translation model, the translation model being capable of converting first type of data into second type of data, and the apparatus comprises:
an obtaining module configured to apply second type of sample data to a back-translation model associated with the translation model to obtain training sample data; and
a training module configured to train the translation model based on the training sample data.

18. A translation apparatus, comprising:
an acquisition module configured to acquire a translation model trained by the method according to any one of claims 1 to 14; and
a translation module configured to translate first type of data into second type of data based on the acquired translation model.

19. An electronic device, comprising:
a memory; and
a processor coupled to the memory, wherein the memory has, stored therein, executable instructions that, when executed by the processor, cause the electronic device to perform the method according to any one of claims 1 to 16.

20. A computer-readable storage medium having, stored thereon, executable instructions that, when executed by a processor, implement the method according to any one of claims 1 to 16.

21. A computer program product comprising instructions that, when executed by a processor, cause implementation of the method according to any one of claims 1 to 16.

22. A computer program comprising program code that, when executed by a processor, causes implementation of the method according to any one of claims 1 to 16.
